# EUROPEAN PATENT APPLICATION

(11) **EP 2 595 277 A1**
(43) Date of publication of application: **22.05.2013**
(21) Application number: 12193259.4
(22) Date of filing: 19.11.2012
(51) Int. Cl.: H02J 7/34

(54) **Emergency warning device with sensors and self power supply with thermocompensated supercapacitors**

(30) Priority: 17.11.2011 IT RM20110610
(71) Applicant: Eta Beta S.r.l., 00043 Ciampino (RM) (IT)
(72) Inventor: Bonanni, Simone, I-00012 Guidonia Montecelio (Roma). (IT)
(74) Representative: Sarpi, Maurizio

(57) **Abstract**

The present invention relates to emergency warning systems, such as sirens, beacons, and emergency lights, designed to guarantee light or acoustic warning for a control system or device, even in the absence of normal primary energy supply. More inparticular, the invention is a supercapacitor backup system that does not require maintenance, capable of optimizing the life of the supercapacitors in relation to the weather conditions and conditions of use so as to enable supply of electrical or electronic optical and/or acoustic warning apparatuses during absence of primary energy, with an intervention time that can be set according to the application.

## Description

### FIELD OF THE INVENTION

The present invention relates to emergency warning systems, such as sirens, beacons, and emergency lights, designed to guarantee light or acoustic warning for a control system or device, even in the absence of normal primary energy supply. More in particular, the invention is a supercapacitor backup system that does not require maintenance, capable of optimizing the service life of the supercapacitors in relation to the weather conditions and conditions of use so as to enable supply of electrical or electronic optical and/or acoustic warning apparatuses during absence of primary energy, with an intervention time that can be set according to the application.

### PRIOR ART

Current warning systems with energy-backup supply that intervene in a short or zero time are based upon practically stable secondary energy sources that supply the electrical or electronic systems in the absence of the primary energy sources exploiting, for example, the energy available in a primary or secondary battery, or else the energy generated by an internal-combustion-engine generator, or else some other energy source.

These systems are deficient in that they require constant maintenance: topping-up of the electrolyte, replacement of batteries at end of life cycle, topping-up of the fuel, etc.

The task of the present invention is to overcome the drawbacks just referred to by envisaging use, as secondary energy source for self-supply of optical and/or acoustic emergency warning devices, of capacitors, also referred to as "supercapacitors" given their high capacitance, for storing electrical energy in the form of charge in dielectrics and/or electrolytes, the supply system of which is able to optimize the cycles of charging, testing, and use so as to lengthen the service life of the supercapacitor itself in an optimized way for this type of utilizers where the energy is required and concentrated in a short period of time, rendering essential thermal compensation during discharge.

As is known, a supercapacitor is a particular type of capacitor having the characteristic of accumulating an amount of electric charge that is exceptionally high as compared to traditional capacitors.

Like every electrical or electronic component, the supercapacitor has a limited operating life linked, according to an exponential law, to manyphysical parameters, amongst which the temperature and voltage of use, according to mathematical laws of the Arrhenius type. By measuring the environmental parameters, it is hence possible to control and reduce the charge voltages and charge and discharge currents so as to extend exponentially the life of the energy backup, since warning devices are devices installed also in outdoor environments and for this reason are subject to deleterious thermal variations in the operating period envisaged.

It is thus possible to guarantee a service life even longer than twenty years, and moreover the energy availability of super capacitors is immediate and higher than that of accumulators for supplying instantaneously devices in a transparent way in a wide range of emergency warning applications, such as in driveway lights that are always turned on, or for driving heavy loads for short periods with even high impulsive powers, such as in beacons, emergency lights, or sirens.

Added to these advantages is above all that of low maintenance costs; in fact, in a device that requires periodic maintenance, over the years frequently the maintenance cost exceeds the economic value of the device on account of the labour cost involved, given that a battery generally needs to be replaced every two years.

In recent years, the technological improvement and reduction of the costs has rendered supercapacitor technology almost comparable with traditional battery technology, and lengthening of the service life of the capacitor further justifies the choice.

The only major technological obstacle to be overcome to ensure the success in use of a supercapacitor in emergency warning systems as energy/power backup in the electrical or electronic field remains that of guaranteeing stabilized voltages during its operation. A capacitor can in fact vary by a factor even higher than 10 the voltage across it during operation (for example, from 0.3 V to 6 V) whereas a battery varies its voltage by a factor lower than unity (from 10.8 V to 13.8 V for a lead battery of a rated voltage of 12.6 V), i.e., by approximately +/- 20% instead of approximately 2000%.

Said obstacle has been overcome by the present invention by inserting between the supercapacitor and the utilizer, which in the specific case is the optical and/or acoustic warning means, a stabilizer/converter device that makes it possible, during operation, to raise, lower, or keep unvaried the equivalent operating current supplied to the emergency warning device so that the light or acoustic function is constant, by means of pulse-width modulation (PWM) and/or pulse-position modulation (PPM) as in a dimmer or a class-D amplifier (the acoustic warning may even be a voice message), directly by the supercapacitor without any type of DC/DC switching conversion, thus reducing the costs of the product considerably. In fact, a DC/DC switching converter with inductor would be relatively very costly in a siren where a power of even 20 W is required on the loudspeaker.

DC/DC conversion, which may be of a buck-boost, SEPIC (single-ended primary-inductor converter), orstep-up type plus linear or equivalent regulation is limited to the control logic, which involves powers of just a few milliwatts.

In addition, according to a peculiar characteristic of the invention, the converter employed uses a "passive" mode of conversion that exploits also the flow of current through the bulk of the conversion integrated device when it is turned off by forcing conduction in the internal diodes of said integrated device so as to extend the operating range thereof safely beyond the limits guaranteed by the manufacturer in the off state. In this mode, the entire integrated device becomes a simple diode. To prevent damage to the integrated device, two techniques are applied: one is to turn it off so that the internal power stages cannot reach the breakdown voltages owing to the voltage overshoots on the inductors; the other protection technique consists in current limitation using resistors or with transistors so as not to damage the silicon or the soldering of the integrated device.

As is always the case, it is the final application that determines optimization of the performance/cost ratio on the basis of the desired result of power or durable energy backup, which can be set via software in the production stage, and according to the type of commercial supercapacitor used and consequently the software parameters.

The main applications are in emergency lamps, driveway lights, and above all optical/acoustic warning devices for anti-intrusion and/or fire-alarm systems, which are always located at considerable heights and in inconvenient and unreachable positions for the precise purpose of making it difficult to tamper with them.

Advantageously moreover, thanks to the extended service life of supercapacitors that reduces the need for maintenance, the present invention enables production of even sealed and hermetic apparatuses that are consequently more secure and difficult to tamper with. In fact, after twenty years it is more advantageous to replace the entire apparatus rather than to carry out maintenance thereon.

From the environmental standpoint, the use of lead, nickel, and other substances dangerous for health is reduced. Supercapacitors are, instead, based upon aluminium, i.e., a metal not deemed dangerous.

The invention will now be described with reference to the attached plates of drawings, which illustrate merely by way of non-limiting example a preferred embodiment thereof. In the plates of drawings:
Figure 1 is a schematic illustration of application of the invention as self-supplied anti-intrusion warning device, where a processor controls the supercapacitors from the warning stage to the charging stage in a thermally compensated way in order to lengthen their service life;
Figure 2 is a diagram of the linear charging stage for the apparatus and of the various points of (single and dual) supply available;
Figure 3 is a block diagram of the conversion stage for the same apparatus;
Figure 4 shows in brief the two MOSFET power stages, without inductors, and controlled in PWM: one for the loudspeaker (symmetrical dual supply) and the other for the beacon (single supply).

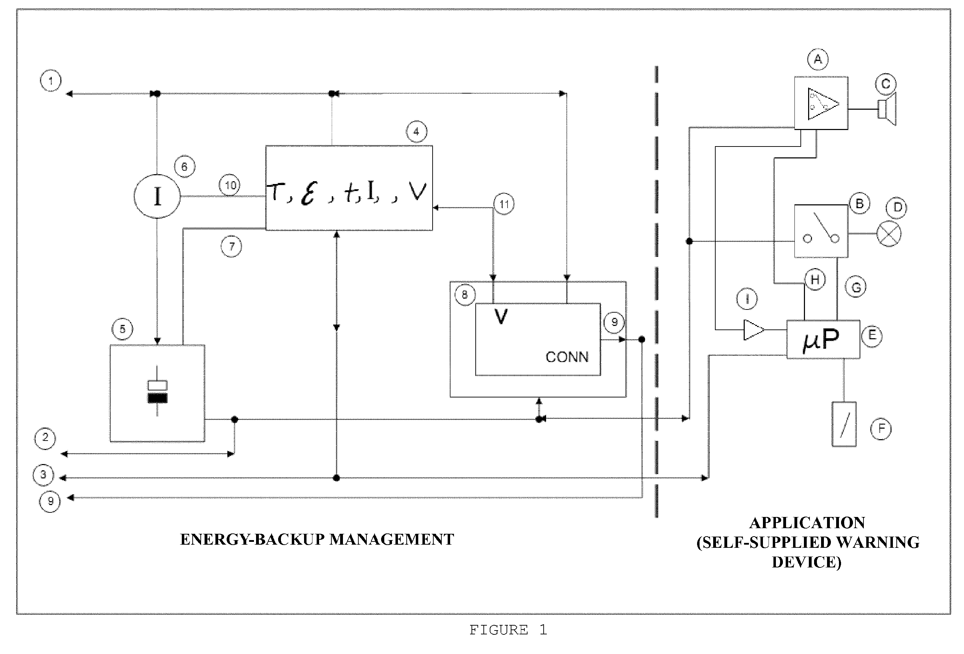

Illustrated in Figure 1 is a possible embodiment of the energy-management-and-storage section (from point 1 to point 11).

As may be seen, the energy-backup management apparatus forming the subject of the present invention is made up of a unit 5 constituted by a series of supercapacitors, the power stages 6 for charging said supercapacitors, a charging-management unit 4, and a stabilizer/converter 8 that comes under the stabilization network 9. The utilizer according to the application can draw energy from one or more of the three possible sources: primary external supply 1, secondary supply 2 directly from the supercapacitors 5, or else supply from the stabilization network 9 downstream of the supercapacitors 5.

The lines represent logical connections, and not electrical signals proper, that depend upon the type of electronic implementation chosen for the invention. Designated by 7 is the line of connection between the charging-management unit 4 and the supercapacitor 5, designated by 10 is the line between the charging power stage and the charging-management unit 4 itself, and designated by 11 is the line that connects the charging-management unit 4 to the stabilizer/converter 8.

In Figure 1, represented by way of non-limiting example is a optical/acoustic microprocessor warning device for anti-intrusion and/or fire-alarm systems (from point A to point F), where the compensation in temperature and current is implemented in the form of firmware and not by means of analog circuits.

In particular, designated by 1 is the primary d.c. or a.c. supply (reduced and rectified internally).

The primary supply 1 also supplies the charging-management unit 4, the charging power stages 6 and the stabilizer/converter 8.

The processor E will moreover interpret as sabotage the absence of supply, whether d.c. or a.c.

The charging-management unit 4 monitors the voltage V of the battery of supercapacitors and protects them from over-voltages that could damage them, monitors and controls the current I in both directions, and monitors the working temperature T for carrying out compensation.

The accuracy of the measurements is even of 1% or better according to the constructional specifications of the supercapacitor. If the supercapacitor cannot tolerate permanent short-circuits, the compensation monitoring will protect also the supercapacitor in the case of shorting.

The circuit implementation chosen is moreover such as to be able to reduce the costs in controlled conditions of temperature and current absorbed by the utilizer, as in the case of a siren for indoor use, by envisaging operation even in the absence of control sensors.

As regards the charging current, this comes from the power stage 6 and its sizing is a function of the desired charging time required for storing the charge and of the need to supply or not the utilizer of the application when this is supplied by the supercapacitor line and not by the primary line. This need obviously depends upon the application.

In the case of Figure 1, it may be seen that the lamp D or the acoustic warning device C is connected to the capacitors directly with supplies that are, respectively, single and dual.

The charging power stage 6 could even be just one electronic component (in the case of low-power systems, and/or low-efficiency systems and/or slow-charging systems) such as a DC/DC or AC/DC converter.

The capacitors 5 can be connected in series, in parallel, or in a mixed way to form batteries of supercapacitors even more complex than what is represented in the circuit of the example.

The monitoring system 4 checks that the logic-voltage stabilizer/converter functions within its operating range and within the range specified by the manufacturer of the capacitors and according to the load requirements of the utilizer, without modifying operation of the latter.

As already mentioned, the stabilizer/converter 8 is of primary importance or essential for guaranteeing operation of a wide range of analog and/or digital electronic apparatuses (such as, for example, microprocessors) where the voltages are frequently used also as voltage references.

In particular, given the wide range of variation of the voltage across the capacitor (which can range from 0.3 V to 14 V in the case in Figure 1) the stabilizer/converter must raise, lower, or else keep unvaried the voltage across the capacitor in order to guarantee a constant output.

In other words, the stabilized voltage during backup operation may have a value lower, equal to, or finally higher than that of the voltage across the capacitor, thus calling for circuit solutions that are able to pass through these three steps, without damaging the converter.

The circuit topology implemented to obtain the voltage stabilizer/converter 8 also depends upon the power and the particular requirements of the converted/stabilized line of the application.

Among the possible solutions that enable these three steps to be carried out we may list in a non-exhaustive way buck-boost converters or else SEPIC converters. In the cases where the supply to be guaranteed is always lower than that of the capacitors, once again by way of non-exhaustive example, linear systems or else switching systems of the flyback, pushpull or forward type, insulated or not according to the application, are sufficient.

The three supplies 1, 2, 9 may also be guaranteed for a number of utilizers; in this case, a number of utilizers can communicate through the control line 3 with the charging-management unit 4.

In the example of Figure 1, the communication is made towards a microprocessor E. Designated by F, instead, are the classic anti-sabotage sensors of the warning device that are commonly employed for being activated in the case of effraction and that in the warning device of the present invention are implemented by the acoustic and optical semiconductor actuators, which are also used as sensors exploiting the microphone effect of dynamic loudspeakers and the forward and/or reverse photoelectric effects (typical of photodiodes) present also in common signalling LEDs, when they are not energized as utilizers.

In a preferred embodiment of the invention, as in the majority of electronic devices, generally there are separate supplies for the power stages, the analog stages, and the digital stages.

In fact, in the application with siren utilizer, it is possible to optimize the system costs by supplying exclusively the digital and/or analog parts at a constant voltage (Vlogic), if so required by the manufacturer of the components used, leaving supply of the acoustic power stages without any stabilization of the voltage on the basis of the considerations presented below.

Since the acoustic power stages will follow the voltage of the capacitors, the maximum acoustic pressure developed by the electro-acoustic actuators will follow the level of charge of the supercapacitors.

To maintain a constant level of acoustic pressure it is sufficient to modulate the signal supplied by the power stages (class-D amplifier) to the actuator compensating the discharge descent curve of the supercapacitors or else to use a power converter, which is tens or hundreds of times more powerful and hence more costly than that of the analog/digital section, also for the final acoustic stages.

The first solution with compensation of the voltage drop, which is more economic, has been chosen both because the voltage is monitored and because it suits the use of high-efficiency class-D amplifiers employed for driving electro-acoustic actuators.

As is known, with this type it is sufficient to reduce the pulse width in a way inversely proportional to the square of the voltage of the supercapacitors to keep the acoustic pressure constant.

As has already been said, the system is optimized for transfer of the energy in a pre-defined short time and in a thermocompensated mode, as in the case of charging. Two options are moreover available to the user:
- at constant pressure, with longer duration of the sound;
- at the maximum acoustic pressure available, which does not follow the compensation.

It is moreover possible to break up the acoustic signal with pauses in order to reduce the percentage of use of the backup.

The same mechanism may be employed for light warnings: stable brightness with long duration, or maximum intensity available.

As regards the type of capacitor charger, in view of the limited current required and the corresponding short period of operation (when the supercapacitors are run down), the preferred circuit choice is the one that enables the fastest and most economic charging rate, i.e., a linear current regulator that injects constant current into the capacitors so that the voltage will follow a practically linear plot instead of the exponential plot of a typical RC circuit.

Given the same maximum current during charging, the system employed can be three times faster in reaching a voltage level higher than 90% of the maximum voltage.

Charging will be carried out when necessary given that it is managed by the processor that monitors the voltage level of the supercapacitors and of the external supply.

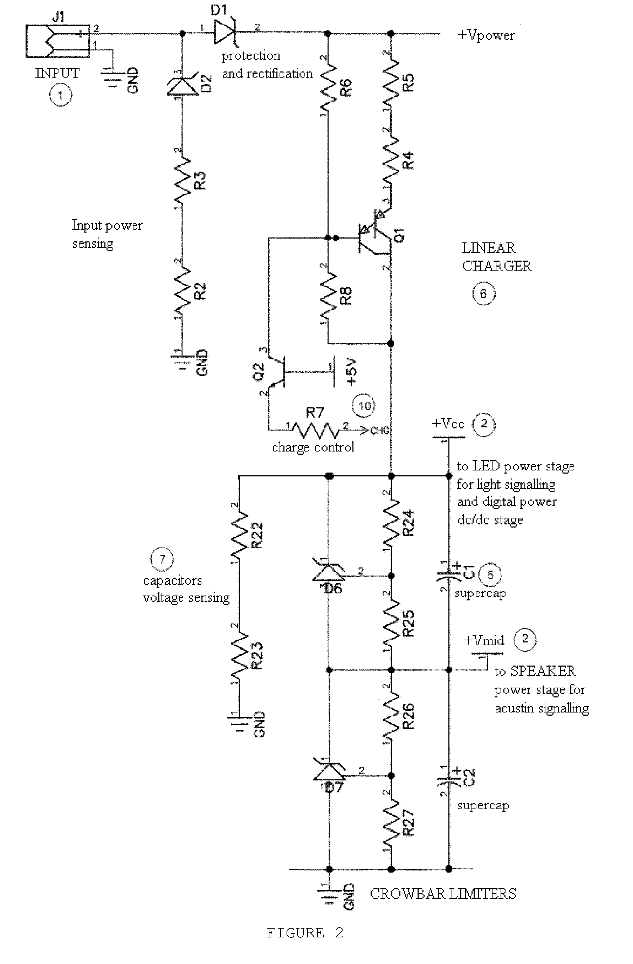

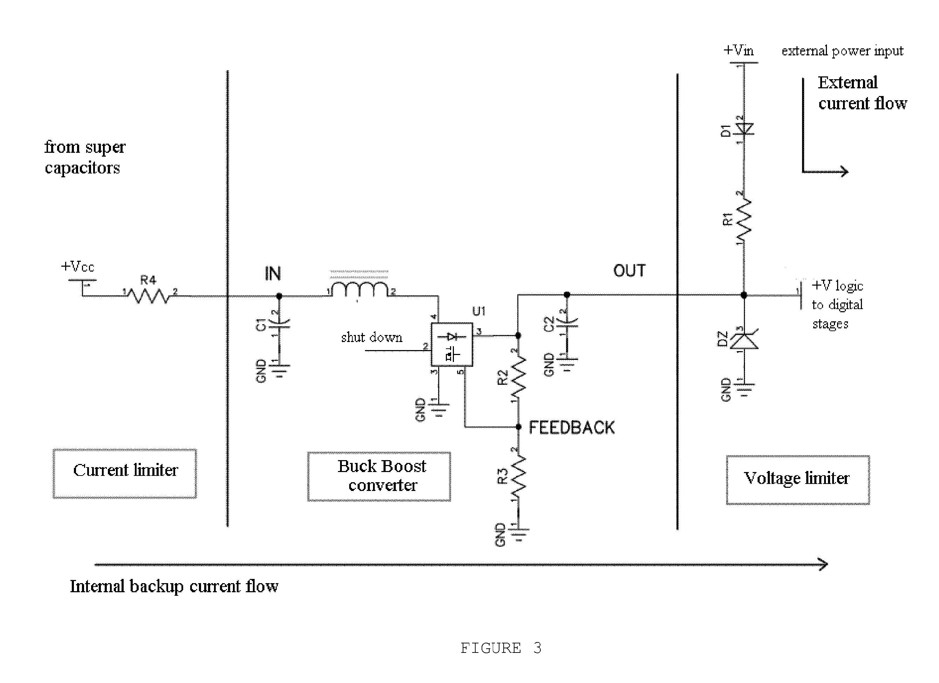

With reference to Figures 2 and 3, we shall now examine the preferred types of circuit for application of the energy-backup system described to the siren of an alarm/antitheft system.

### Charging stage

The linear charging circuit chosen is described hereinafter with reference to the representation of Figure 2, neglecting the base currents in the transistor to simplify explanation thereof.

Through the active-low command "CHG" the current across R7 is reflected on R6 so that R6 functions as reference for the constant-current generator.

The current that flows in these resistors is also used to light up a signalling LED, which lights up exploiting the energy that would otherwise be lost in Q1 in the voltage jump between +Vpower and +Vcc.

Q1 - R4 - R5 form a generator of constant current, the collector current that charges C1 and C2 (battery of supercapacitors), limited by the voltage R4-R5 linked to the voltage in R7, which is equal to Vlogic minus the base voltage drop of Q2.

The voltage Vcc is monitored by the microprocessor on the basis of the ambient temperature so as to limit the maximum charging voltage. In addition, the value Vcc is used to compensate the acoustic pressure and the light intensity in the power stages of the self-supplied siren.

The optional "crowbar" stage provided around D6 and D7 (shunt regulator, such as, for example, TL431) provides an additional safety stage that intervenes, in the case where the maximum voltage recommended by the manufacturer of the supercapacitor (and that can be set in the ratio R25/R24 in the example of D6) is exceeded, by absorbing and dissipating the charging current in the case of malfunctioning or absence of the processor. This protection serves also to guarantee that all the capacitors in the series reach the maximum voltage, compensating the factory tolerances of the capacitance of the capacitors.

The circuit solution used moreover renders possible control of the charging current both with a PWM control and by means of a linear regulation. The charging current in the capacitor follows linearly, but for voltage drops across the junctions, the voltage level of the command "CHG" thanks to the current mirror used on the resistors R7-R4-R5 as described above.

The charging current is moreover independent of the external primary voltage +Vpwr: the circuit is able to function up to and beyond 30 V, enabling its application also in the fire-alarm sector, where 24-V systems are used, and not only systems with a rated voltage of 12 V, as in the case of anti-theft applications.

For simplicity of exposition, reference will be made to buck-boost converters: other convenient types are on the other hand possible.

### Conversion stage

As has already been said, the converter in the siren application supplies, at constant voltage, the analog/digital stages and, without any stabilization or inductors, the class-D power stages of the loudspeaker and the PWMpower stages for lighting, to obtain economy of scale, guaranteeing complete functionality of the system.

We shall describe the conversion stage with reference to Figure 3.

The voltage of the supercapacitors, limited by a resistor of a low value (a few ohms), flows into the buck-boost converter, which supplies, through +Vlogic, the microprocessor control sections of the siren. This resistor limits the current that flows in the silicon of the integrated buck-boost device when this is turned off, sending it to the regulation/protection Zener diode downstream of the stages.

The backup current path follows the bottom line of flow.

To guarantee immediate operation also with capacitors discharged there has been envisaged an alternative current path, i.e., an external current flow coming directly from outside to guarantee the low current of a few milliamps required by the processor.

The voltage-limiting crowbar for protecting the processor has here been obtained with a Zener diode Dz, since the converter, before turning off at around 6 V, could pass through a step in which the regulation voltage is not guaranteed.

In conclusion, R1 limits the current coming from outside, and R4 limits the current coming from the supercapacitors, which, in the case of overload and malfunctioning of the buck-boost converter, would flow in an uncontrollable way into Dz provided to protect the processor.

The diodes contained in the integrated device that carries out buck-boost conversion moreover guarantee that the current injected in Dz at initial start-up does not go to 0 in the uncharged supercapacitors, thus preventing instantaneous supply of the processor.

Hence, the voltage Vlogic, during operation, will be stabilized according to the feedback network of the converter or will be at the most equal to that of the diode Dz.

Finally, C4 filters the ripple with the converter.

### Power stages

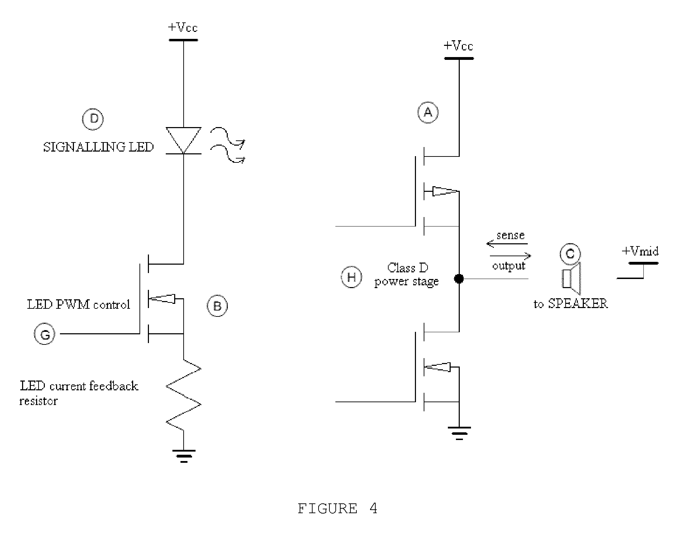

Represented schematically in Figure 4 are the power stages for the light warning D, where the PWM control (G) maintains the brightness constant through compensation or else by means of current feedback, and the class-D acoustic power stage controlled in PWM (H) is such as to free the loudspeaker C, by inhibiting the stages, during the periods in which the warning device is not active so as to use the acoustic actuator as acoustic sensor in listening mode. The signal picked up by the acoustic sensor will be amplified by the stage (I) and sent to the processor E for detection of sabotage, impact, and effraction of an acoustic nature. Likewise, also the signal of an anti-sabotage switch (F) for detecting mechanical opening will be considered by the processor E of the siren, and the same applies to the sensors of an optical type designed to detect fast variations of brightness.

## Claims

1. An emergency warning device provided with light and/or acoustic means and self-supplied with long-life thermocompensated supercapacitors, comprising on the line for primary supply (1) of the utilizers: one or more supercapacitors (5); a charging-management unit (4) designed to monitor the voltage (V) of said one or more supercapacitors (5) to protect them from over-voltages in order to lengthen the service life of the capacitors and of the product, and monitor and control the current (I) in both directions and according to the ambient temperature (T); a charging power stage (6) for charging said one or more supercapacitors; and a stabilizer/converter (8) that makes it possible, during backup operation, to raise, lower, or keep unvaried the voltage across the supercapacitors, said emergency warning device being **characterized in that** the stabilizer/converter (8) is designed to guarantee operation of the logic and of the power stages (A) and (B) of the acoustic and light utilizers compensating them according to the voltage of the supercapacitors in order to keep the light and/or acoustic functionality of said utilizers constant at the maximum possible transfer of energy when they are energized and to use them as sensors when they are turned off, exploiting the loudspeakers as microphones (electrodynamic effect) and the signalling LEDs as photodiodes (forward and/or reverse photoelectric effects).

2. The emergency warning device provided with light and/or acoustic means and self-supplied with long-life thermocompensated supercapacitors as per Claim 1, **characterized in that** the light or acoustic functionality of the utilizers is kept constant by means of pulse-width modulation (PWM) and/or pulse-position modulation (PPM) directly by the supercapacitor without any type of DC/DC switching conversion towards the application so as to reduce considerably the costs of the product.

3. The emergency warning device provided with sensors and self-supplied with long-life thermocompensated supercapacitors as per Claim 1, **characterized in that** the converter employed uses a "passive" mode of conversion that exploits also the flow of current through the bulk of the integrated conversion device when it is turned off so as to extend safely the operating range thereof beyond the limits guaranteed by the manufacturer, thereby obtaining that in this mode the entire integrated device becomes a simple diode.

4. The emergency warning device provided with sensors and self-supplied with long-life thermocompensated supercapacitors as per Claim 3, **characterized in that,** to prevent damage to the integrated device, two techniques are applied: one technique consists in turning it off so that the internal power stages cannot reach the breakdown voltages due to the voltage overshoots on the inductors; the other protection technique consists in current limitation using resistors or with transistors so as not to damage the silicon or the soldering of the integrated device.

5. The emergency warning device provided with sensors and self-supplied with long-life thermocompensated supercapacitors as per any one of the preceding claims, **characterized in that** the charging-management unit (4) is moreover designed to verify that the voltage stabilizer/converter (8) functions within the operating limits set by the manufacturer of the supercapacitors (5) and of the converter (8) and according to the load requirements of the utilizer, optimizing the service life of the supercapacitors (5) according to the ambient temperature, which is an essential parameter for anti-intrusion warning devices or outdoor apparatuses, which are subject to major thermal variations.

6. The emergency warning device provided with sensors and self-supplied with long-life thermocompensated supercapacitors as per any one of the preceding claims, **characterized in that** the thermocompensation for lengthening the life of the supercapacitor is applied also during the discharge step by monitoring the current.

7. The emergency warning device provided with sensors and self-supplied with long-life thermocompensated supercapacitors as per Claim 1, **characterized in that**, in the case where the supply to be guaranteed is always lower than that of the supercapacitors, the type of circuit to obtain the voltage stabilizer/converter (8) only envisages linear systems or else switching systems.

8. The emergency warning device provided with sensors and self-supplied with long-life thermocompensated supercapacitors as per Claim 1, **characterized in that** the utilizer can draw energy from one or more of the three possible sources: a primary external supply (1), a secondary supply (2) directly from the supercapacitors (5), or else a supply from the stabilization network (9) downstream of the supercapacitors (5).

9. The emergency warning device provided with sensors and self-supplied with long-life thermocompensated supercapacitors as per Claim 1, **characterized in that**, in the case where the utilizer is the siren of an alarm/antitheft system, the system costs can be optimized by envisaging that the converter supplies exclusively the digital and/or analog parts at constant voltage (Vlogic), if so required by the manufacturer of the components used, leaving supply of the acoustic power stages without voltage stabilization.

10. The emergency warning device provided with sensors and self-supplied with long-life thermocompensated supercapacitors as per Claim 9, **characterized in that** to maintain a constant level of acoustic pressure the signal supplied by the amplifiers to the actuator is modulated by compensating the discharge descent curve of the supercapacitors.

11. The emergency warning device provided with sensors and self-supplied with long-life thermocompensated supercapacitors as per Claim 10, **characterized in that** using high-efficiency class-D amplifiers employed for driving the electro-acoustic actuators it is sufficient to reduce the pulse width in a way inversely proportional to the square of the voltage of the supercapacitors to keep the acoustic pressure constant.

12. The emergency warning device provided with sensors and self-supplied with long-life thermocompensated supercapacitors as per Claim 8 onwards, **characterized in that** for charging the supercapacitors a linear current regulator is used that injects constant current into the capacitors, said charging taking place when necessary, being managed by a processor (E) that monitors the voltage level of the supercapacitors and of the external supply, optimizing the cycle of the supercapacitors in regard to the temperature to lengthen the life of the capacitors themselves.

13. The emergency warning device provided with sensors and self-supplied with long-life thermocompensated supercapacitors as per Claim 12, **characterized in that** to guarantee immediate operation also with capacitors discharged an alternative current path is envisaged (external current flow) coming directly from outside to guarantee the current of a few milliamps required by the processor (E).

14. The emergency warning device provided with sensors and self-supplied with long-life thermocompensated supercapacitors as per Claim 13, **characterized in that** said processor (E) is protected by a voltage-limiting crowbar obtained with a Zener diode (Dz), when the converter allows current to pass when it is turned off.

15. The emergency warning device provided with sensors and self-supplied with long-life thermocompensated supercapacitors as per Claim 14, **characterized in that** the diodes contained in the integrated device that carries out buck-boost conversion guarantee that the current injected in the diode (Dz) at initial start-up does not go to 0 in the uncharged supercapacitors, preventing instantaneous supply of the processor (E).
